# EUROPÄISCHE PATENTANMELDUNG

(11) **EP 2 703 474 A1**
(43) Veröffentlichungstag der Anmeldung: **05.03.2014**
(21) Anmeldenummer: 13004042.1
(22) Anmeldetag: 14.08.2013
(51) Int. Cl.: C10L 3/10, B01D 53/62

(54) **Verfahren und Vorrichtung zur Aufbereitung eines Kohlendioxid und Methan enthaltenden Gasgemisches**

(30) Priorität: 31.08.2012 DE 102012017233
(71) Anmelder: Rheinisch-Westfälisch-Technische Hochschule Aachen, 52062 Aachen (DE)
(72) Erfinder: Bauerschlag, Nils Robert, 52072 Aachen (DE); Gerhards, Harald Philipp, 52062 Aachen (DE); Noel, Yves, 52064 Aachen (DE); Quicker, Peter, 50668 Köln (DE)
(74) Vertreter: Cohausz Hannig Borkowski Wißgott

(57) **Zusammenfassung**

Die Erfindung betrifft ein Verfahren und eine Vorrichtung zur Aufbereitung eines Kohlendioxid und Methan enthaltenen Gasgemisches in einer Aufbereitungsanlage durch Reduktion des partiellen Kohlendioxidanteils in dem Gasgemisch, insbesondere in einem Deponie-, Gruben- oder Biogas, bei dem das Gasgemisch durch einen mit einem Kohlendioxid bindenden Mittel beschickten Reaktorbehälter geführt wird, bis zur Überschreitung eines vorbestimmten Sättigungsgrades des Mittels mit gebundenem Kohlendioxid, wonach das Kohlendioxid bindende Mittel dieses Reaktorbehälters ersetzt wird, wobei für eine kontinuierliche Beschickung einer mit aufbereitetem Gasgemisch (3) zu versorgenden oder betriebenen Anlage (4), in der Aufbereitungsanlage wenigstens zwei Reaktorbehälter (1, 2) eingesetzt werden, wobei zu jeder Betriebszeit der Aufbereitungsanlage sich wenigstens einer aller Reaktorbehälter (1, 2) in einer Regelbetriebsphase befindet, in der Gasgemisch (3) zur Aufbereitung durch das bindende Mittel geleitet wird und während der Regelbetriebsphase des wenigstens einen Reaktorbehälters (1) sich wenigstens ein anderer (2) aller Reaktorbehälter (1, 2) in einer Neubeschickungsphase befindet, in welcher dieser andere Reaktorbehälter (2) entleert und neu mit Kohlendioxid bindendem Mittel befüllt wird.

## Beschreibung

Die Erfindung betriff ein Verfahren zur Aufbereitung eines Kohlendioxid und Methan enthaltenden Gasgemisches in einer Aufbereitungsanlage durch Reduktion des partiellen Kohlendioxidanteils in dem Gasgemisch, bei dem das Gasgemisch durch einen mit einem Kohlendioxid bindenden Mittel beschickten Reaktorbehälter geführt wird bis zur Überschreitung eines vorbestimmten/vorgegebenen Sättigungsgrades des Mittels mit gebundenem Kohlendioxid, wonach das Kohlendioxid bindende Mittel dieses Reaktorbehälters ersetzt wird.

Die Erfindung betrifft weiterhin auch eine Aufbereitungsanlage für den kontinuierlichen Betrieb einer mit einem aufzubereitenden Kohlendioxid und Methan enthaltenden Gasgemisch betriebenen Anlage.

Verfahren zur Aufbereitung eines Kohlendioxid und Methan enthaltenden Gasgemisches sowie auch Anlagen für eine Aufbereitung sind im Stand der Technik grundsätzlich bekannt. Beispielsweise benennt die Publikation AT 5 04 345 B1 ein solches Verfahren, bei dem ein solches Gasgemisch unter Verwendung von Müllverbrennungsschlacke hinsichtlich des Methananteils angereichert wird dadurch, dass das in dem Gasgemisch vorhandene Kohlendioxid durch Karbonatisierung der Müllverbrennungsschlacke gebunden wird.

Aus diesem Dokument ist es weiterhin bekannt, in einem Reaktorbehälter die Aufbereitung des Gasgemisches im Durchflussprinzip vorzunehmen, wobei sodann nach Erschöpfung der Müllverbrennungsschlacke, das heißt Erreichen eines vorbestimmten Sättigungsgrades mit gebundenem Kohlendioxid, eine weitere Anreicherung des Gasgemisches hinsichtlich des Methananteils nicht mehr erreicht werden kann und gemäß der Offenbarung dieses Dokumentes sodann die verbrauchte Müllverbrennungsschlacke gegen neue ausgetauscht wird.

Als problematisch wird es bewertet, dass bei dem aus dem vorgenannten Dokument bekannten Verfahren keine kontinuierliche Bereitstellung eines Gasgemisches mit genügend hohem Methangehalt ermöglicht wird, da immer wieder eine Unterbrechung des Aufbereitungsprozesses durch Austausch der hinsichtlich ihrer Kohlendioxidbindung erschöpften Müllverbrennungsschlacke notwendig ist.

Es besteht daher keine Möglichkeit gasversorgte oder auch gasbetriebene Anlagen, die mit einem aufbereiteten Gasgemisch, das heißt mit einem gegenüber dem Gasgemisch vor der Aufbereitung erhöhten partiellen Methananteil beziehungsweise verringerten partiellen Kohlendioxidanteil vorsorgt oder betrieben werden, kontinuierlich mit solchem Gasgemisch zu beschicken. Das vorgenannte Dokument benennt in diesem Zusammenhang, dass mit einem gefüllten Reaktorbehälter nur zyklisch gearbeitet werden kann, wobei der jeweilige Prozesszyklus jeweils durch eine Neubeschickung des Reaktionsbehälters mit neuer Müllverbrennungsschlacke unterbrochen wird und ein solcher Prozesszyklus demnach nur eine Dauer von etwa ein bis maximal zweieinhalb Tage aufweist.

Aufgabe der Erfindung ist es daher, ein Verfahren und eine Vorrichtung bereitzustellen, durch welche die Möglichkeit erschlossen wird, gasbetriebene oder gasversorgte Anlagen, die ein Mindestmaß an Methangehalt im Gas erfordern, kontinuierlich zu beschicken, selbst wenn das hierfür zur Verfügung stehende Gasgemisch diesen Mindestanteil von Methan nicht ursprünglich zur Verfügung stellt und zunächst durch Anreicherung des Methangehaltes beziehungsweise analog durch Abreicherung des CO₂-Gehaltes aufbereitet werden muss.

Weiterhin ist es eine Aufgabe der Erfindung eine Vielzahl von anfallenden Gasgemischen mit nicht genügendem Methangehalt einer sinnvollen Verwendung zuzuführen. Als solche Gasgemische, die zur Aufbereitung eingesetzt werden können, stehen zum Beispiel Deponie-Gase, Gruben-Gase oder auch Bio-Gase zur Verfügung, die in Bioreaktoren anfallen und heutzutage häufig aufgrund zu geringen Methangehaltes abgefackelt werden, teils unter künstlicher Zufügung von Methan oder durch andere im Stand der Technik bekannte und aufwändige Anreicherungsprozesse hinsichtlich ihres Methananteils angereichert werden.

Es ist darüber hinaus eine Aufgabe der Erfindung durch ein solches Verfahren beziehungsweise eine hierfür geeignete Aufbereitungsanlage für die Nutzung solcher, zunächst aufzubereitender Gasgemische, verschiedene gasbetriebene oder gasversorgte Anlagen zu erschließen, die bislang aufgrund der Erfordernisse hinsichtlich einer bestimmten Mindesthöhe an Methangehalt, nicht geeignet waren, unaufbereitete Gasgemische aus den eingangs beispielhaft genannten Quellen verarbeiten zu können. Typische gasbetriebene Anlagen sollen aufgabengemäß z.B. solche sein, in denen das Gasgemisch unmittelbar verbraucht wird, z.B. verbrannt wird, wie z.B. in Blockheizkraftwerken. Gasversorgte Anlagen, in denen das Gasgemisch nicht zwingend selbst verwertet wird, sollen aufgabengemäß z.B. Erdgasnetze sein, die zur Verteilung und Weiterleitung von Gasgemischen dienen.

Weiterhin ist es in einer bevorzugten Ausgestaltung der Erfindung auch eine Aufgabe, im großen Maßstab anfallende Abfallprodukte im Rahmen des erfindungsgemäßen Verfahrens, beziehungsweise in der erfindungsgemäßen Anlage, einer Nutzung zuzuführen beziehungsweise auch weitere Nutzbarkeiten zu erschließen. Aufgabengemäß soll besonders Rostasche einer solchen Nutzung zugeführt werden.

Erfindungsgemäß wird die Aufgabe dadurch gelöst, dass bei einem Verfahren der grundsätzlich eingangs genannten gattungsgemäßen Art zur Erzielung einer kontinuierlichen Beschickung einer mit aufbereitetem Gasgemisch betriebenen oder versorgten Anlage, in der Aufbereitungsanlage wenigstens zwei Reaktorbehälter eingesetzt werden, wobei zu jeder Betriebszeit der Aufbereitungsanlage sich wenigstens einer aller Reaktorbehälter in einer Regelbetriebsphase befindet, in der Gasgemisch zur Aufbereitung durch das kohlendioxidbindende Mittel geleitet wird und während der Regelbetriebsphase des wenigstens einen Reaktorbehälters sich wenigstens ein anderer aller Reaktorbehälter in einer Neubeschickungsphase befindet, in welcher dieser andere Reaktorbehälter entleert und neu mit kohlendioxidbindendem Mittel befüllt wird.

Die Aufgabe wird weiterhin mit einer Aufbereitungsanlage gelöst, die wenigstens zwei Reaktorbehälter umfasst, durch die das aufzubereitende Gasgemisch zur Reduktion des partiellen Kohlendioxidanteils hindurchleitbar ist, wobei die wenigstens zwei Reaktorbehälter zwischen einer Zuführung des aufzubereitenden Gasgemisches in die Aufbereitungsanlage und einer Abführung des aufbereiteten Gasgemisches aus der Aufbereitungsanlage fluidtechnisch parallel angeordnet sind und durch steuerbare Ventile wenigstens einer der Reaktorbehälter mit der Zuführung und der Abführung verbindbar ist.

Dies kann insbesondere so erfolgen, dass während der Verbindung wenigstens eines der Reaktorbehälter von allen Reaktorbehältern mit der Zuführung und der Abführung wenigstens ein anderer aller Reaktorbehälter von der Zuführung und der Abführung abtrennbar ist, um während dieser getrennten Zeit eine Neubeschickung des wenigstens einen solchen getrennten Reaktorbehälters mit neuem, unverbrauchtem Kohlendioxid bindendem Mittel vornehmen zu können.

Der ganz wesentliche Grundgedanke des erfindungsgemäßen Verfahrens beziehungsweise auch der Aufbereitungsanlage beruht demnach darin, statt mit lediglich einem Reaktorbehälter die Aufbereitung des Gasgemisches durchzuführen, was zwangsläufig zu Stillstandszeiten der Anlage zum Zweck der Neubeschickung führt, nun wenigstens zwei Reaktorbehälter einzusetzen, die zeitlich nacheinander oder gegebenenfalls teils überlappend sich in einer Regelbetriebsphase befinden, in welcher beim Durchleiten von aufzubereitenden Gasgemischen die Abreicherung des CO₂-Anteils beziehungsweise Anreicherung des Methan-Anteils stattfindet.

Es erschließt sich so die Möglichkeit innerhalb eines solchen Regelbetriebes wenigstens eines von mehreren Reaktorbehältern an wenigstens einem anderen Reaktorbehälter das erschöpfte Kohlendioxid bindende Mittel gegen neues Mittel auszutauschen. So kann ein Wechselbetrieb zwischen den mehreren Reaktorbehältern stattfinden, der sicherstellt, dass zu jeder Zeit durch die Aufbereitungsanlage ein Gasstrom von aufzubereitendem Gasgemisch fließt und demnach auch jederzeit, das heißt kontinuierlich, eine mit Gas betriebene / versorgte Anlage mit dem aus dieser Anlage stammenden aufbereiteten Gasgemisch, das heißt mit einem über den benötigten Mindestmethangehalt angehobenen Gasgemisch, zu versorgen.

Als Kohlendioxid bindendes Mittels kann z.B. Rostasche aus Müllverbrennungsanlagen eingesetzt werden. Dieses, ggfs. auch andere Mittel, insbesondere andere Aschen haben den weiteren Vorteil, dass neben einer Bindung von Kohlendioxid auch eine insbesondere vollständige Abscheidung von Schwefelwasserstoff stattfindet, das in den Ausgangsgasgemischen vorhanden sein kann. Allgemein kann es vorgesehen sein mit einem Kohlendioxid bindenden Mittel auch andere unerwünschte Stoffe im Ausgangsgasgemisch zu binden.

Dabei kann es in einer vorteilhaften Weiterbildung vorgesehen sein, kontinuierlich in dem aufbereiteten Gasgemisch, also demjenigen, das vorgesehen ist, um die gasbetriebene oder gasversorgte Anlage zu beschicken, den Methangehalt und/den Kohlendioxidgehalt dieses aufbereiteten Gasgemisches durch geeignete Sensoren zu überwachen. Eine solche Überwachung kann zentral für alle Reaktorbehälter in einer Leitung stattfinden, in der das aufbereitete Gas der gasbetriebenen Anlage zugeführt wird oder auch für jeden Reaktorbehälter separat in dessen Ausgangsleitung.

Zum einen kann so erzielt werden, dass während des Betriebs der Aufbereitungsanlage immer ein geforderter Mindestmethangehalt im aufbereiteten Gasgemisch vorliegt, um einen sicheren Betrieb der gasbetriebenen Anlage zu gewährleisten, sofern nicht der Betrieb der Anlage beziehungsweise die Durchführung des Verfahrens darauf ausgerichtet ist, grundsätzlich einen maximal möglichen Methangehalt im aufbereiteten Gasgemisch zu erzielen.

Zum anderen kann durch die Messung und Beobachtung des Methan- und/oder Kohlendioxidgehaltes durch geeignete Sensoren im aufbereiteten Gasgemisch festgestellt werden, wann ein Erschöpfungszustand bzw. bestimmter Sättigungsgrad des CO₂-bindenden Mittels vorliegt, insbesondere der sich allmählich ankündigt durch bei ansonsten gleichbleibendem Prozessbedingungen langsam abnehmendem Methan- beziehungsweise zunehmenden CO₂-Anteil im aufbereiteten Gasgemisch. So kann auf diese Art der Erschöpfungszustand bzw. Sättigungsgrad bevorzugt indirekt gemessen werden, ohne auf das bindende Mittel selbst zugreifen zu müssen.

In einer vorteilhaften Weiterbildung des Verfahrens kann es demnach vorgesehen sein, dass nach Überschreiten eines vorgegebenen Sättigungsgrades des kohlendioxidbindenden Mittels (insbesondere durch Vergleich des Methan- oder CO₂-Anteils mit einem vorgegebenen/ vorgebbaren Grenzwert) in dem wenigstens einen sich in der Regelbetriebsphase befindenden Reaktorbehälter wenigstens ein mit frischem kohlendioxidbindendem Mittel neu beschickter Reaktorbehälter angefahren wird, insbesondere wobei das Anfahren im Sinne der Erfindung bedeutet, dass der Reaktorbehälter vorbereitet wird und von der Neubeschickungsphase in die Regelbetriebsphase übergeht.

In einer vorteilhaften Ausgestaltungsvariante kann es vorgesehen sein, dass in der sogenannten Anfahrphase, das heißt im Vorbereiten aus der Neubeschickungsphase in die Regelbetriebsphase, wenigstens ein zwischenzeitig neu beschickter Reaktorbehälter vor der Einleitung des aufzubereitenden Gasgemisches zunächst mit einem nicht brennbaren Gas, insbesondere einem Inertgas gespült wird, insbesondere zu dem Zweck, die bei einer Neubeschickung des wenigstens einen Reaktorbehälters mit frischem CO₂-bindendem Mittel in den Reaktorbehälter hineingelangte Luft aus dem Reaktorbehälter auszutreiben und hierdurch die Bildung von explosionsfähigen Luft-Methangemischen zu verhindern.

In einer besonders bevorzugten Ausführungsvariante des erfindungsgemäßen Verfahrens kann es dabei vorgesehen sein, als nichtbrennbares Gas zum Zwecke der Spülung das Abgas der mit dem aufbereiteten Gasgemisch betriebenen Anlage zu verwenden. Es wird hierdurch die Bereitstellung und Bevorratung von besonderen Inertgasen zum Zwecke der Spülung vermieden und demnach das ohnehin bei dem Betrieb der gasbetriebenen Anlage anfallende Abgas sinnvoll eingesetzt. Auch hier kann es vorgesehen sein, durch Einsatz von Sensoren in der Ausgangsleitung des wenigstens einen Reaktorbehälters festzustellen, zu welchem Zeitpunkt eine ausreichende Spülung stattgefunden hat, beispielsweise durch Überwachung des Sauerstoffgehaltes in der Ausgangsleitung eines solchen Reaktorbehälters, da dieser zur Explosionsfähigkeit des Gasgemisches führt.

Zur Überwachung des Luftabgasgemisches beim Spülprozess kann es alternativ zur vorgenannten Sauerstoffüberwachung ebenso vorgesehen sein, die CO₂-Konzentration in der Ausgangsleitung des gespülten Reaktorbehälters zu überprüfen, insbesondere auf Überschreitung eines gewünschten Grenzwertes. Dies wird insbesondere dann vorgenommen, wenn zum Zwecke des Spülens das Abgas der gasbetriebenen Anlage verwendet wird, da dieses sodann einen hohen CO₂-Anteil aufweist.

Nach Abschluss eines solchen Spülvorganges kann es zum Zwecke des Anfahrens des wenigstens einen neu beschickten Reaktorbehälters vorgesehen sein, die Einleitung des aufzubereitenden Gasgemisches in diesem wenigstens einen gespülten Reaktorbehälter zu starten.

Zu diesem Zeitpunkt der Anfahrphase kann es grundsätzlich vorgesehen sein, dass gleichzeitig sowohl in den wenigstens einen anfahrenden Reaktorbehälter als auch in den wenigstens einen noch im Regelbetrieb oder einem Abfahrprozess betriebenen Reaktorbehälter, das aufzubereitende Gasgemisch eingeleitet wird, somit also zu gewissen Zeiten des Verfahrens ein echter Parallelbetrieb von mehreren Reaktorbehältern möglich ist.

In verfahrensgemäß bevorzugter Weiterbildung kann es vorgesehen sein, dass nach dem Beginn der Einleitung des aufzubereitenden Gasgemisches in den wenigstens einen zuvor neu beschickten und gespülten Reaktorbehälter zumindest zeitweilig das aus dem wenigstens einen Reaktorbehälter austretende Gasgemisch abfackelt wird oder in einer anderen Alternative in den sich noch in der Regelbetriebsphase oder einer eingeleiteten Abfahrphase befindlichen wenigstens einen Reaktorbehälter eingeleitet wird.

Diese Alternativen können beispielsweise so lange durchgeführt werden, bis messtechnisch ein Überschreiten eines Mindestmethangehaltes oder ein Unterschreiten eines Höchstkohlendioxidgehaltes des austretenden Gemisches festgestellt wird. Demnach können auch hier wieder entsprechende Sensoren, insbesondere dieselben wie die eingangs genannten Sensoren verwendet werden. Insbesondere ist bis zum Überschreiten des geforderten Mindestmethangehaltes in dem wenigstens einen neu anfahrenden Reaktorbehälter zur kontinuierlichen Gasbereitstellung sicher zu stellen, dass das noch wenigstens ein anderen Reaktorbehälter sich noch im Regelbetrieb, allenfalls einer Abfahrphase befindet, in der noch aus diesem wenigstens einen Reaktorbehälter der Mindestgehalt an Methan bezogen werden kann. Alternativ kann ansonsten während dieser Zeit ein Zumischen von Methan aus einem Vorrat stattfinden um den Mindestgehalt zu erzielen.

Nach einem entsprechenden Überschreiten des Mindestmethangehaltes oder Unterschreiten des Höchstkohlendioxidgehaltes, wobei diese Gehalte jeweils für das Verfahren beziehungsweise eine Anlage festgeschrieben sein können oder auch variabel einstellbar sind, ist sodann der zuvor neu beschickte und gespülte wenigstens eine Reaktorbehälter in seine Regelbetriebsphase übergegangen und vollzieht nun dadurch, dass das aufzubereitende Methan und Kohlendioxid enthaltende Gasgemisch durch diesen wenigstens einen Reaktorbehälter hindurchgeführt wird, die Aufbereitung des Gasgemisches durch Bindung von Kohlendioxid und somit partielle Anreicherung des Methananteils.

Zu diesem Zeitpunkt hat demnach der wenigstens eine, sich jetzt in der Regelbetriebsphase befindliche Reaktorbehälter den Betrieb des wenigstens einen ursprünglich verwendeten Reaktorbehälters, bei dem eine Sättigung des kohlendioxidbindenden Mittels festgestellt wurde, abgelöst, was verdeutlicht, dass ohne Unterbrechung der Gasaufbereitung eine mit dem aufbereiteten Gasgemisch betriebene Anlage kontinuierlich mit dem benötigten Gasgemisch versorgt ist.

In vorteilhafter Ausgestaltung kann es weiterhin vorgesehen sein, dass der wenigstens eine sich zuvor in einer Regelbetriebsphase befindliche Reaktorbehälter, bei dem das Überschreiten eines vorgegebenen Sättigungsgrades festgestellt ist, in eine Abfahrphase übergeht, insbesondere dann, wenn der wenigstens eine andere Reaktorbehälter, zu dem zuvor das Neubeschicken und das Anfahren beschrieben wurde, in seine Anfahrphase übergegangen ist oder bereits die Regelbetriebsphase erreicht hat.

Unter der Abfahrphase wird hier erfindungsgemäß im Wesentlichen verstanden, dass der zuvor sich in der Regelbetriebsphase befindende Reaktorbehälter diese Regelbetriebsphase verlässt und auf eine Neubeschickung in der sogenannten Neubeschickungsphase vorbereitet wird.

In vorteilhafter Weiterbildung kann es hierfür vorgesehen sein, dass in einer solchen Abfahrphase die Zuführung von aufzubereitendem Gasgemisch in dem wenigstens einen abfahrenden Reaktorbehälter unterbrochen wird und sodann der wenigstens eine abfahrende Reaktorbehälter mit einem nichtbrennbaren Gas, insbesondere einem Inertgas gespült wird. Vorteilhafterweise wird hierdurch vermieden, dass vor der Öffnung eines Reaktorbehälters zum Zwecke des Austausches des Kohlendioxid bindenden Mittels ein explosionsfähiges Gasgemisch in dem Reaktorbehälter vorliegt, was zu einer Gefährdung von Wartungspersonal führen kann.

Auch hier kann es in besonders bevorzugter Ausgestaltung vorgesehen sein, dass zur Spülung das Abgas einer mit dem aufbereiteten Gasgemisch betriebenen Anlage verwendet wird, demnach also das Abgas der Anlage zum Zwecke des Abfahrens in den wenigstens einen abfahrenden Reaktorbehälters eingeleitet wird, um so restliche Methananteile aus dem Volumen dieses wenigstens einen abfahrenden Reaktorbehälters auszutreiben und Explosionsgefahren zu vermeiden.

Während des Spülvorganges kann es vorgesehen sein, das aus einem solchen wenigstens einen abfahrenden Reaktorbehälter austretende Gasgemisch abzufackeln oder der gasbetriebenen Anlage zuzuführen, insbesondere solange wie der für die Anlage benötigte Mindestmethangehalt noch nicht unterschritten ist oder in anderer Alternative das austretende mit dem Spülgas, insbesondere dem Abgas versehene Gasgemisch, in wenigstens einen sich in einer Anfahrphase oder einer Regelbetriebsphase befindlichen Reaktorbehälter einzuleiten.

Insbesondere nach Unterschreiten eines Höchstmethangehaltes, der für den Prozess des Abfahrens festgeschrieben oder auch variabel einstellbar gehalten werden kann, kann es sodann vorgesehen sein, dass der wenigstens eine abfahrende beziehungsweise komplett außer Betrieb genommene Reaktorbehälter geöffnet wird, um das Kohlendioxid bindende Mittel, das einen maximal tolerierten Sättigungsgrad erreicht oder überschritten hat, aus dem wenigstens einen Reaktorbehälter entfernt und durch neues Kohlendioxid bindendes Mittel ersetzt wird. Hiernach kann der wenigstens eine neu befüllte Reaktorbehälter geschlossen werden und steht somit grundsätzlich für einen Anfahrprozess zur Verfügung, um wenigstens einen Reaktorbehälter abzulösen, sowie es zuvor ausführlich beschrieben wurde.

Das Verfahren stellt demnach, wie bereits beschrieben, einen kontinuierlichen Betrieb einer mit dem aufbereiteten Gasgemisch betriebenen oder versorgten Anlage sicher, wobei zu jeder Betriebszeit einer erfindungsgemäßen Anlage, welche das Verfahren durchführt, wenigstens ein Reaktorbehälter sich im Regelbetrieb befindet, das heißt also durch diesen wenigstens einen im Regelbetrieb befindlichen Reaktorbehälter noch nicht aufbereitetes Gasgemisch eingeleitet, in diesem durch Kohlendioxidbindung aufbereitet, insbesondere hinsichtlich Methan angereichert wird und sodann das aufbereitete, in Methan angereicherte Gasgemisch den wenigstens einen in Regelbetrieb befindlichen Reaktorbehälter verlässt, um in der gasbetriebenen bzw. gasversorgten Anlage verwendet zu werden.

Im Stand der Technik ist es bekannt, dass gasbetriebene oder gasversorgten Anlagen grundsätzlich unabhängig von der Art ihrer Arbeitsweise und der Gasnutzung bestimmte Mindestmethangehalte benötigen, um einen kontinuierlichen Betrieb zu gewährleisten. Dieser Mindestmethangehalt kann konkret bei verschiedenen Anlagen deutlich unter dem grundsätzlich maximal möglichen Methangehalt liegen, der mit dem erfindungsgemäßen Verfahren beziehungsweise einer Aufbereitungsanlage gemäß der Erfindung erzielt werden kann.

Es kann demnach vorgesehen sein, das Verfahren beziehungsweise eine Aufbereitungsanlage gemäß der Erfindung derart zu betreiben, dass das aufbereitete Gasgemisch einen Methananteil aufweist, der lediglich größer ist als der geforderte Mindestmethangehalt, jedoch kleiner ist als der mit dem Verfahren beziehungsweise der erfindungsgemäßen Anlage grundsätzlich erzielbare maximale Methangehalt. Beispielsweise kann auf die Stärke der Methananreicherung, das heißt dem bei der Aufbereitung erzielten Methangehalt, Einfluss genommen werden durch die Größe des Volumenstromes, das heißt grundsätzlich also der Fließgeschwindigkeit, mit welcher das aufzubereitende Gas in die Reaktorbehälter eingeleitet und durch diese hindurchgeführt wird. Durch entsprechende Steuerung von Verdichtern oder von Pumpen/Gebläsen zur Förderung des aufzubereitenden Gasgemisches kann demnach Einfluss genommen werden auf die erzielte Endqualität des aufbereiteten Gasgemisches hinsichtlich des Methangehaltes.

Hier kann es beispielsweise vorgesehen sein, einen Regelkreis zu implementieren, der den Methangehalt des aufbereiteten Gasgemisches misst und durch Rückkopplung die entsprechenden Pumpen oder Verdichter, die zur Förderung des nicht aufbereiteten Gasgemisches eingesetzt werden, steuert beziehungsweise regelt, um eine Gasqualität oberhalb des Mindestmethangehaltes zu realisieren, jedoch unterhalb des maximalen Methangehaltes.

In einer anderen Ausführung kann es auch vorgesehen sein, dass zur Aufbereitung in eine Aufbereitungsanlage, die das erfindungsgemäße Verfahren durchführt, nur ein Teilstrom eines Gesamtstromes von Methan und Kohlendioxid enthaltenen Gasgemisch eingeleitet wird und das in der Aufbereitungsanlage aufbereitete Gasgemisch nach dem Verlassen der Aufbereitungsanlage mit einem Reststrom des Gesamtstromes verschnitten wird, um einen geforderten Mindestmethangehalt vor der Zuführung zu einer mit dem aufbereiteten Gasgemisch betriebenen Gasanlage zu erzielen.

Es kann sodann zum Beispiel vorgesehen sein, das Verfahren beziehungsweise die Aufbereitungsanlage grundsätzlich derart zu betreiben, dass der maximal mögliche Methangehalt im die Anlage verlassenden aufbereiteten Gasgemisch erzielt wird und sodann eine Heruntermischung des Methangehaltes durch Verschneiden mit dem ursprünglichen nicht aufbereiteten Gasgemisch erfolgt, um die gewünschte Gasqualität hinsichtlich des Mindestgehaltes, der für den Betrieb der Anlage gefordert ist, einzustellen.

Ein solches Vorgehen erschließt auch die Möglichkeit, die Aufbereitungsanlage beziehungsweise das Verfahren bis knapp an den Erschöpfungszustand beziehungsweise den Sättigungszustand des kohlendioxidbindenden Mittels heranzufahren, zumindest so lange bis dass der benötigte Mindestmethangehalt im aufbereiteten Gasgemisch noch nicht unterschritten ist, wobei sodann lediglich vor der Nutzung des Gasgemisches bei einer gasbetriebenen Anlage die Menge des zum Verschneiden benutzten Gases angepasst wird, um den Mindestmethangehalt zu erzielen.

Dies bedeutet, dass in dem Fall, dass in einem sich in der Regelbetriebsphase befindlichen Reaktorbehälter das CO₂-bindende Mittel allmählich den Erschöpfungbeziehungsweise Sättigungszustand erreicht, der Methangehalt grundsätzlich abnimmt und somit die Menge an zum Zweck des Verschneidens zuzuführenden ursprünglichen, nicht aufbereiteten Gasgemisches reduziert werden kann unter Beibehaltung eines geforderten Mindestmethangehaltes vor der Einleitung in die gasbetriebene Anlage.

Es kann demnach auch hier ein Regelkreis implementiert sein, um den Methangehalt in dem Gasgemisch vor der Zuführung in gasbetriebene Anlagen zu messen, mit einem geforderten Mindestmethangehalt zu vergleichen und in Abhängigkeit von der Größe der Abweichung die Menge des zum Verschneiden benutzten, nicht aufbereiteten Gasgemisches anzupassen.

Bei den vorgenannten Ausführungsvarianten kann es grundsätzlich vorgesehen sein, dass bei einem Unterschreiten eines für den Betrieb bzw. die Versorgung der mit dem aufbereiteten Gasgemisch betriebenen / versorgten Anlage nötigen Mindestvolumenstromes (unabhängig davon, ob ein Verschneiden stattfindet oder der Mindestmethangehalt durch Volumenstromänderung in den Reaktorbehältern geändert wird) dass dem aufbereiteten Gasgemisch zusätzlich ein Gasgemisch aus einem Gasdepot zugefügt wird.

Dies kann besonders dann sinnvoll sein, wenn eine Regelung des Methangehaltes im aufbereiteten Gasgemisch durch eine Volumenstromregelung bei der Führung des Gases durch den wenigstens einen im Regelbetrieb befindlichen Reaktorbehälter erfolgt, demnach also der Volumenstrom, der für die gasbetriebene Anlage zur Verfügung steht, nicht in konstantem Maße aus dem wenigstens einen im Regelbetrieb befindlichen Reaktorbehälter entnommen werden kann und somit eine eventuell fehlende Menge durch externe Zuführung aus einem bestehenden Gasdepot aufgefüllt wird.

In einer weiterhin bevorzugten Ausführungsvariante des Verfahrens oder auch der Aufbereitungsanlage kann es vorgesehen sein, dass die Aufbereitungsanlage wenigstens vier Reaktorbehälter aufweist, wobei zu jeder Betriebszeit gemäß den eingangs beschriebenen insgesamt vier bestehenden Betriebsphasen, wenigstens ein Reaktorbehälter aller Reaktorbehälter sich in einer Regelbetriebsphase befindet, wenigstens ein Reaktorbehälter aller Reaktorbehälter sich in einer Abfahrphase befindet, wenigstens ein Reaktorbehälter aller Reaktorbehälter sich in einer Anfahrphase befindet und weiterhin wenigstens ein Reaktorbehälter aller Reaktorbehälter sich in einer Neubeschickungsphase befindet.

Hierdurch wird sichergestellt, dass die mehreren, hier insbesondere wenigstens vier Reaktorbehälter, nacheinander kontinuierlich ihre jeweiligen Betriebsphase ändern in der Richtung der Regelbetriebsphase, hierauf folgend Abfahrphase, hierauf folgend Neubeschickungsphase und hierauf folgend Anfahrphase.

Sofern mehr als vier Reaktorbehälter bei einem solchem vierphasigen Verfahren zum Einsatz kommen, kann weiterhin sichergestellt werden, dass zum Zwecke des Anfahrens und Übergang in einen Regelbetrieb mehrere, gleichzeitig neu beschickte Reaktorbehälter zur Verfügung stehen. Hierdurch kann beispielsweise bei längeren Abwesenheitszeiten von Wartungspersonal sichergestellt werden, dass ein kontinuierlicher Betrieb der gesamten Anlage möglich ist, selbst wenn ein abgefahrener Reaktorbehälter nicht unmittelbar nach Ende seiner Abfahrphase direkt in die Neubeschickungsphase übergehen kann, sondern hier eine Wartezeit eingeschoben ist, beispielsweise weil Wartungspersonal sich am Wochenende in Abwesenheit befindet.

So können solche Abwesenheitszeiten problemlos überbrückt werden, dadurch dass ein Vorrat an neu beschickten Reaktorbehältern vorgegeben ist, aus dem heraus nacheinander Reaktorbehälter in ihre Anfahrphase und sodann in die Regelbetriebsphase übergehen können, ohne das gleichzeitig andere von allen Reaktorbehältern neu beschickt werden, sondern zunächst eine Wartezeit bis zur Neubeschickung durchmachen.

Ein Ausführungsbeispiel einer möglichen Aufbereitungsanlage zur Durchführung des erfindungsgemäßen Verfahrens wird nachfolgend beschrieben hinsichtlich der unterschiedlichen Phasen.

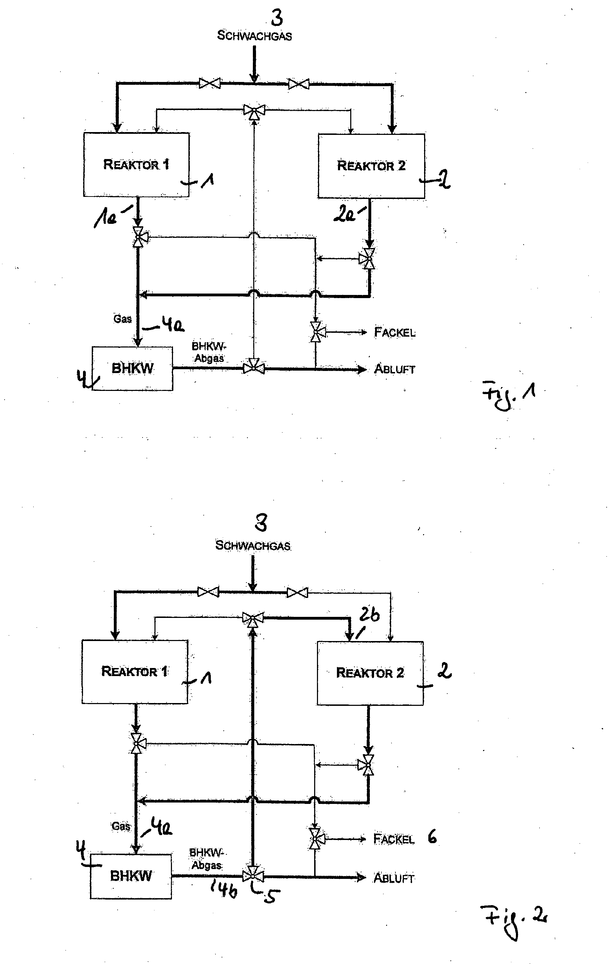

Die Figur 1 zeigt zunächst, wie auch die anderen Figuren, eine grundsätzliche Anordnung einer erfindungsgemäßen Aufbereitungsanlage, die hier zur Vereinfachung lediglich zwei Reaktorbehälter 1 und 2 aufweist, die mit einem kohlendioxidbindenden Mittel verwendet werden können, um bei einer Durchleitung von aufzubereitenden Methan und Kohlendioxid enthaltenden Gasgemisch den partiellen Kohledioxidanteil zu verringern beziehungsweise den partiellen Methananteil zu erhöhen, das heißt anzureichern.

Wie auch im Stand der Technik bekannt, kann hier als Kohlendioxid bindendes Mittel zum Beispiel Rostasche verwendet werden, das heißt eine solche Asche, die in üblichen Müllverbrennungsanlagen als Verbrennungsprodukt bestehen bleibt und als solches Produkt den hier erfindungsgemäß verwertbaren Vorteil aufweist, dass diese Rostasche durch Karbonatisierung Kohlendioxid aus einem hindurchgeleiteten Gas binden kann.

Um dies zu ermöglichen, kann es beispielsweise vorgesehen sein, in einem Reaktorbehälter einen perforierten Boden vorzusehen, auf dem ein kohlendioxidbindendes Mittel, wie beispielsweise Rostasche, auch als Müllverbrennungsschlacke benannt, aufgefüllt werden kann, um sodann durch den perforierten Boden hindurch den Reaktorbehälter mit einem Kohlendioxid und Methan enthaltenden Gas von für eine Nutzung zu geringem Methananteil einzuleiten.

Durch eine Vielzahl von Bodenöffnungen strömt demnach das aufzubereitende Gas in die auf dem Boden aufliegende Rostasche oder ein anderes CO₂-bindendes Mittel, wodurch das CO₂ in dem Gas gebunden wird, bei der Rostasche beispielsweise durch die benannte Karbonatisierung. Es kann sodann z.B. im oberen Bereich eines solchen Reaktorbehälters eine Abführung des aufbereiteten Gases vorgesehen sein, mit einem über dem ursprünglichen Methangehalt angereicherten Methangehalt. Hier kann die Anreicherung z.B. im Bereich von 95 bis 99% liegen, oder auch wunschgemäß geringer.

Die Figur 1 zeigt, dass von einer Zuführung 3 sogenanntes Schwachgas, demnach also Gas mit einem zu geringen Methananteil, in die hier dargestellte Aufbereitungsanlage zugeführt wird und dieser Gasstrom grundsätzlich aufteilbar ist auf allgemein eine Vielzahl mehrerer vorhandener Reaktorbehälter 1,2, von denen hier in dieser Anlage nur zwei dargestellt sind.

Diese Reaktorbehälter sind derart verschaltet oder zumindest verschaltbar, dass sie zu jeder Zeit zum einen parallel oder auch jeweils nur alleinig von dem aufzubereitenden Gasgemisch oder (hier nicht gezeigt) nacheinander (z.B. in den An- und Abfahrphasen oder zur effektiven Volumenvergrößerung des bindenden Mittels und Laufzeitverlängerung) durchströmt werden können.

Die Figur 1 zeigt hier eine zeitliche Situation eines Regelbetriebes, bei der im vorliegenden Fall beide dargestellten Reaktorbehälter 1,2 gleichzeitig aufgrund der vorliegenden fluidtechnischen Parallelschaltung von dem aufzubereitenden Gasgemisch durchströmt werden, wonach das aus den Reaktoren 1,2 austretende aufbereitete Gasgemisch hier einer als BHKW ausgestalteten gasbetriebenen Anlage 4 zugeführt wird. Die gasbetriebene Anlage 4, hier ein Blockheizkraftwerk, verwertet das Gas durch einen Verbrennungsprozess, wobei das Abgas, im vorliegenden Fall im Regelbetrieb, zunächst der Abluft zugeführt wird, zum Beispiel durch einen Schornstein.

Es können hier zum Beispiel in der Zuleitung 4a zur gasbetriebenen Anlage 4 oder auch an den jeweiligen Ausgängen 1 a, 2a der Reaktorbehälter 1,2 nicht gezeigte Sensoren vorgesehen sein, um den Methangehalt und/oder Kohlendioxidgehalt im aufbereiteten Gasgemisch zu messen und zu überwachen, so dass hierdurch auch festgestellt werden kann, wenn das kohlendioxidbindende Mittel, wie zum Beispiel die Rostasche, seinen bzw. die Rostasche ihren Sättigungsgrad erreicht.

Die Figur 2 zeigt sodann weiterhin, dass nach Überschreiten eines vorgegebenen Sättigungsgrades des kohlendioxidbindenden Mittels, im vorliegenden Fall im Reaktorbehälter 2, dieser Reaktorbehälter 2 in eine Abfahrphase übergeht, in welcher der Reaktorbehälter 2 zunächst mit Spülgas beaufschlagt wird, was im vorliegenden Fall aus dem Abgas der gasbetriebenen Anlage 4 gebildet wird. Hierfür wird die Abgasleitung 4b der gasbetriebenen Anlage durch ein umschaltbares Ventil 5 auf einen Eingang 2b des Reaktorbehälters 2 rechts in der Figur 2 aufgeschaltet, so dass hier der Spülvorgang einsetzt. Das beim Spülen aus dem rechten Reaktorbehälter 2 austretende Gasgemisch, welches mit Spülgas versetzt ist, kann hier im vorliegenden Fall hier zunächst noch der gasbetriebenen Anlage 4 zugeführt werden, zumindest solange wie deren mindestbenötigter Methangehalt im Gasgemisch noch nicht unterschritten ist.

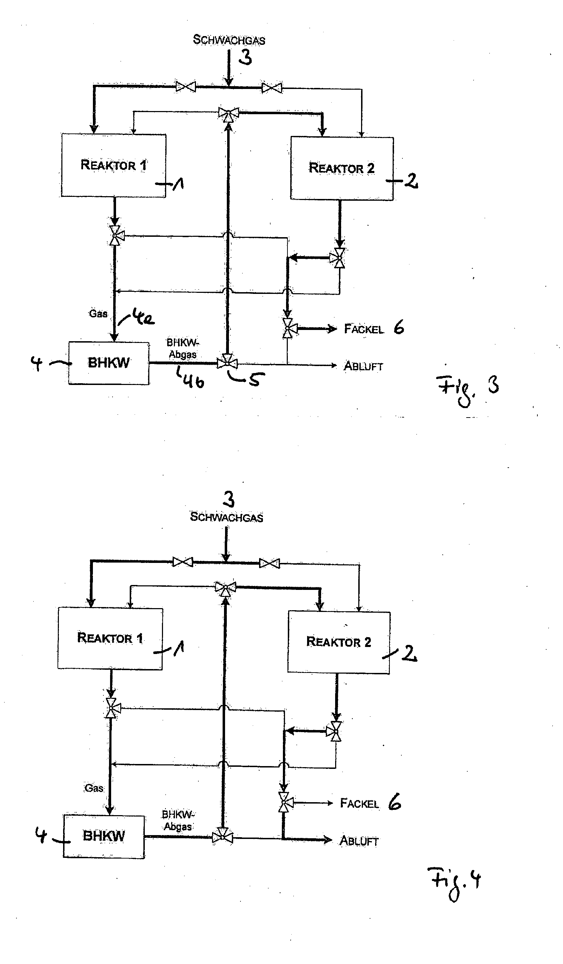

Ist dies erfolgt, so zeigt die Figur 3, dass im Abfahrprozess sodann die Ausgangsleitung des rechtsseitigen Reaktorbehälters 2 umgeschaltet werden kann von einer Verbindung zur gasbetriebenen Anlage auf eine Fackel 6, um das mit Spülgas versehene, aus dem Reaktorbehälter 2 austretende Gas zur Umwelt hin zu verbrennen.

Ist das restliche Methan aus dem gespülten Reaktorbehälter 2 ausgetrieben, was zum Beispiel durch Messung des Methangehaltes oder des CO₂-Gehaltes festgestellt werden kann, so kann der Reaktorbehälter 2 rechts in der Figur 2 beziehungsweise der Figur 3 geöffnet und neu befüllt werden. Dabei ist es ersichtlich, gemäß Figuren 2 und 3, dass während der Abfahrphase des Reaktorbehälters 2 und während einer Neubefüllung der linksseitig in den Figuren dargestellte Reaktorbehälter 1 kontinuierlich seinen Regelbetrieb durchführt, das heißt das Gas, welches aufzubereiten ist, durch diesen hindurchströmt und nach Aufbereitung zur gasbetriebenen Anlage 4 geführt wird.

Ist der Reaktorbehälter 2 rechts in den Figuren 2 und 3 neu befüllt, so kann gemäß der Figur 4 ein Anfahren dieses Reaktors 2 dann erfolgen, wenn beispielsweise zu dem linksseitig dargestellten Reaktorbehälter 1 festgestellt wird, dass dessen kohlendioxidbindendes Mittel, wie beispielsweise Rostasche, sich der Sättigung nähert beziehungsweise einen vorgegebenen Sättigungsgrad überschreitet.

Zu diesem Zweck wird, wie hier dargestellt, erneut Spülgas in den rechtsseitigen Reaktor der Figur 4 eingeleitet, was wiederum aus dem Abgas der gasbetriebenen Anlage, wie hier dem Blockheizkraftwerk, stammt. Es wird hierdurch die beim Neubefüllen des Reaktors 2 in diesen Reaktor eingetretene Luft aus dem Reaktor ausgetrieben und so das Entstehen von explosiven Luft-Methan-Gemischen vermieden.

Das bei diesem Spülen aus dem Reaktorbehälter austretende Gas kann beispielsweise der Abluft und somit der Umwelt zugeführt werden. Im Anschluss daran erfolgt gemäß der Figur 1 ein sich wiederholender Zyklus, bei dem begonnen wird, den Reaktor 2 mit dem aufzubereitenden Gas zu beaufschlagen, so dass dieser sodann in seinen Regelbetrieb übergeht, wohingegen sodann der Reaktor 1 an der linksseitigen Position der Figuren in eine Abfahrphase übergeht, wie sie zuvor zum Reaktor 2 gemäß den Figuren beschrieben wurde.

Es zeigt sich demnach, dass nach den figürlichen Darstellungen während der Abfahrphase, der Neubeschickungsphase und der Anfahrphase wenigstens ein Reaktorbehälter der gesamten Aufbereitungsanlage sich im Regelbetrieb befindet, das heißt, das zur Aufbereitung in diesen eingeleitete Gasgemisch hinsichtlich des CO₂-Anteils verringert beziehungsweise des Methananteils anreichert. Es steht also zu jeder Zeit des Betriebes mindestens ein sich im Regelbetrieb befindlicher Reaktor zur Verfügung, um die gasbetriebene Anlage 3 mit dem benötigten Gasgemisch zu versorgen.

In den Figuren nicht dargestellt ist eine mögliche Ausführungsform, bei der so wie im allgemeinen Beschreibungsteil dargelegt sowohl während der Abfahrphase als auch der Anfahrphase eines der Reaktorbehälter, dass aus diesen Reaktorbehälter ausströmende Gasgemisch dem jeweils anderen wenigstens einen im Regelbetrieb befindlichen Reaktor zugeführt werden kann.

Allgemein gilt für die Ausgestaltung dieses erfindungsgemäßen Verfahrens beziehungsweise der Anlage, dass grundsätzlich beliebige Kohlendioxid bindende Mittel zum Einsatz kommen können, um Schwachgase, wie beispielsweise Deponie-Gase, Gruben-Gase oder Bio-Gase aufzubereiten, das heißt, hinsichtlich des Methananteiles anzureichen und hinsichtlich des Kohlendioxidanteils abzureichern. Wie in den Ausführungen beschrieben, wird bevorzugt Rostasche aus Müllverbrennungsanlagen eingesetzt, beispielsweise nach einer vorherigen Aufbereitung durch Zerkleinern und gegebenenfalls Hydratisierung.

Neben der Verwendung von Rostasche aus Müllverbrennungsanlagen können auch andere Aschen, die aus Verbrennungsprozessen stammen, grundsätzlich für die erfindungsgemäßen Zwecke zum Einsatz kommen.

Das erfindungsgemäße Verfahren beziehungsweise die Anlage hat weiterhin noch den besonderen Vorteil, dass besonders die Rostasche aus Müllverbrennungsanlagen bei dem Verfahren beziehungsweise in der Anlage in besonders kurzer Zeit karbonatisiert werden kann, insbesondere innerhalb weniger Tage, wohingegen gemäß dem Stand der Technik üblicherweise solche Rostaschen aus Müllverbrennungsanlagen tage- oder wochenlang der Atmosphäre ausgesetzt werden, um eine demgegenüber deutlich langsamere Karbonatisierung mit dem CO₂-Anteil der Umgebungsluft zu erzielen.

Aufgrund dieser schnellen Karbonatisierung, die auch als Alterung der Rostasche bezeichnet wird, steht eine Rostasche aus Müllverbrennungsanlagen in sehr kurzen Zeitabständen in karbonatisierter Form, das heißt gealterter Form vor, um anderen Zwecken zugeführt zu werden, wie beispielsweise Bauzwecken.

Das erfindungsgemäße Verfahren hat somit zwei wesentliche Vorteile, nämlich es macht zum einen Schwachgase mit ansonsten zu geringem Methangehalt durch das Verfahren beziehungsweise die Anlage nach der Aufbereitung und Anhebung des Methangehaltes einsatzfähig für den Betrieb fast jeglicher gasbetriebener oder gasversorgter Anlagen, wie beispielsweise Blockheizkraftwerken (gasbetrieben), so dass beispielsweise Gruben-Gase, Deponie-Gase oder allgemein auch Biogase aus Bioreaktoren einer sinnvollen Verwendung zugeführt werden können, wobei weiterhin die Aufbereitung mit einem Abfallstoff, wie der Müllverbrennungsrostasche, durchgeführt werden kann, unter dem gleichzeitig erzielten Vorteil der besonders schnellen Alterung und Karbonatisierung dieses eigentlichen Abfallproduktes, wodurch dieses Abfallprodukt ebenso eine neue und vor allen schnelle Verwendung, zum Beispiel als Baustoff, finden kann. Eine gasversorgte Anlage, die nicht selbst mit dem Gas betrieben wird, kann z.B. durch ein Erdgasnetz gebildet werden, in das das aufbereitete Gas eingespeist wird, insbesondere zur Verteilung des Gasgemisches an Haushalte oder andere Verwerter / Verbraucher.

Das erfindungsgemäße Verfahren beziehungsweise die Aufbereitungsanlage erschließt somit zwei grundsätzliche Abfallprodukte und führt diese einer sich gegenseitig ergänzenden Nutzung zu.

## Patentansprüche

1. Verfahren zur Aufbereitung eines Kohlendioxid und Methan enthaltenen Gasgemisches in einer Aufbereitungsanlage durch Reduktion des partiellen Kohlendioxidanteils in dem Gasgemisch , insbesondere in einem Deponie-, Gruben- oder Biogas, bei dem das Gasgemisch durch einen mit einem Kohlendioxid bindenden Mittel beschickten Reaktorbehälter geführt wird, bis zur Überschreitung eines vorbestimmten Sättigungsgrades des Mittels mit gebundenem Kohlendioxid, wonach das Kohlendioxid bindende Mittel dieses Reaktorbehälters ersetzt wird, **dadurch gekennzeichnet, dass** für eine kontinuierliche Beschickung einer mit aufbereitetem Gasgemisch (3) zu versorgenden oder betriebenen Anlage (4), in der Aufbereitungsanlage wenigstens zwei Reaktorbehälter (1, 2) eingesetzt werden, wobei zu jeder Betriebszeit der Aufbereitungsanlage sich wenigstens einer aller Reaktorbehälter (1, 2) in einer Regelbetriebsphase befindet, in der Gasgemisch (3) zur Aufbereitung durch das bindende Mittel geleitet wird und während der Regelbetriebsphase des wenigstens einen Reaktorbehälters (1) sich wenigstens ein anderer (2) aller Reaktorbehälter (1, 2) in einer Neubeschickungsphase befindet, in welcher dieser andere Reaktorbehälter (2) entleert und neu mit Kohlendioxid bindendem Mittel befüllt wird.

2. Verfahren nach Anspruch 1, **dadurch gekennzeichnet, dass** nach Überschreiten eines vorgegebenen Sättigungsgrades des Kohlendioxid bindenden Mittels in dem wenigstens einen sich in der Regelbetriebsphase (1) befindenden Reaktorbehälters, insbesondere welches durch Vergleich des im aufbereiteten Gasgemisch gemessenen Kohlendioxidanteils und/oder Methananteils mit einem vorgegebenen Grenzwert festgestellt wird, wenigstens ein neu beschickter Reaktorbehälter (2) angefahren wird und hierdurch von der Neubeschickungsphase in die Regelbetriebsphase übergeht.

3. Verfahren nach Anspruch 2, **dadurch gekennzeichnet, dass** in der Anfahrphase eines neu beschickten Reaktorbehälters (2) dieser Reaktorbehälter vor der Einleitung des aufzubereitenden Gasgemisches mit einem nicht brennbaren Gas, insbesondere einem Inertgas gespült wird.

4. Verfahren nach Anspruch 3, **dadurch gekennzeichnet, dass** zur Spülung als nicht brennbares Gas das Abgas der mit dem aufbereiteten Gasgemisch betriebenen Anlage in den wenigstens einen sich in der Anfahrphase befindenden Reaktorbehälter (2) eingeleitet wird, insbesondere wobei das aus diesem wenigstens einen Reaktorbehälter (2) bei der Spülung austretende Luft-Abgasgemisch der Umwelt zugeleitet wird.

5. Verfahren nach Anspruch 3 oder 4, **dadurch gekennzeichnet, dass** nach Beginn der Einleitung des aufzubereitenden Gasgemisches (3) in den wenigstens einen gespülten Reaktorbehälter (2) zumindest zeitweilig, insbesondere bis zur messtechnisch festgestellten Überschreitung eines Mindestmethangehaltes oder Unterschreitung eines Höchstkohlendioxidgehaltes des austretenden Gasgemisches das aus diesem wenigstens einen Reaktorbehälter austretende Gasgemisch
a. abgefackelt wird oder
b. in den sich noch in der Regelbetriebsphase oder einer eingeleiteten Abfahrphase befindlichen wenigstens einen Reaktorbehälter (1) geleitet wird.

6. Verfahren nach Anspruch 2, **dadurch gekennzeichnet, dass** der wenigstens eine sich in einer Regelbetriebsphase befindliche Reaktorbehälter (2) nach Überschreiten des vorgegebenen Sättigungsgrades, insbesondere nach Eintreten wenigstens eines neu beschickten Reaktorbehälters (1) in eine Anfahrphase, in eine Abfahrphase übergeht.

7. Verfahren nach Anspruch 6, **dadurch gekennzeichnet, dass** in einer Abfahrphase die Zuführung von aufzubereitendem Gasgemisch (3) in den wenigstens einen abfahrenden Reaktorbehälter (2) unterbrochen wird und der der wenigstens eine abfahrende Reaktorbehälter (2) mit einem nicht brennbaren Gas, insbesondere einem Inertgas gespült wird.

8. Verfahren nach Anspruch 7, **dadurch gekennzeichnet, dass** zur Spülung das Abgas einer mit dem aufbereiteten Gasgemisch betriebenen Anlage(4) in den wenigstens einen abfahrenden Reaktorbehälter (2) eingeleitet wird, wobei das aus dem wenigstens einen abfahrenden Reaktorbehälter austretende Gasgemisch, insbesondere in Abhängigkeit des gemessenen Methangehalts
a. abgefackelt (6) wird oder
b. der mit dem aufbereiteten Gasgemisch betriebenen Anlage (4) zugeführt wird oder
c. in wenigstens einen sich in einer Anfahrphase oder einer Regelbetriebsphase befindlichen Reaktorbehälter (1) eingeleitet wird.

9. Verfahren nach einem der vorherigen Ansprüche, **dadurch gekennzeichnet, dass** zur Aufbereitung in die Aufbereitungsanlage ein Teilstrom eines Gesamtstromes von Methan und Kohlendioxid enthaltenden Gasgemisch, insbesondere einer Deponie oder Grube oder Biogasanlage eingeleitet wird und das in der Aufbereitungsanlage aufbereitete Gasgemisch mit einem Reststrom des Gesamtstromes verschnitten wird zur Einstellung eines geforderten Methangehaltes, insbesondere vor der Zuführung zu einer mit dem aufbereiteten Gasgemisch zu versorgenden Anlage.

10. Verfahren nach einem der vorherigen Ansprüche, **dadurch gekennzeichnet, dass** bei einem Unterschreiten eines für den Betrieb der mit dem aufbereiteten Gasgemisch betriebenen Anlage nötigen Mindestvolumenstromes dem aufbereiteten Gasgemisch zusätzliches Gasgemisch aus einem Gasdepot zugeführt wird.

11. Verfahren nach einem der vorherigen Ansprüche, **dadurch gekennzeichnet, dass** in der Aufbereitungsanlage wenigstens vier Reaktorbehälter eingesetzt werden, wobei zu jeder Betriebszeit der Aufbereitungsanlage wenigstens ein Reaktorbehälter aller Reaktorbehälter sich in einer Regelbetriebsphase befindet, wenigstens ein Reaktorbehälter aller Reaktorbehälter sich in einer Abfahrphase befindet, wenigstens ein Reaktorbehälter aller Reaktorbehälter sich in einer Anfahrphase befindet und wenigstens ein Reaktorbehälter aller Reaktorbehälter sich in einer Neubeschickungsphase befindet.

12. Aufbereitungsanlage für den kontinuierlichen Betrieb einer mit einem aufzubereitenden Kohlendioxid und Methan enthaltenen Gasgemisch betriebenen Anlage, insbesondere gemäß einem Verfahren nach einem der vorherigen Ansprüche, **dadurch gekennzeichnet, dass** sie wenigstens zwei Reaktorbehälter (1,2) umfasst, durch die das aufzubereitende Gasgemisch (3) zur Reduktion des partiellen Kohlendioxidanteils hindurchleitbar ist, wobei die wenigstens zwei Reaktorbehälter (1, 2) zwischen einer Zuführung des aufzubereitenden Gasgemisches (3) in die Aufbereitungsanlage und einer Abführung des aufbereiteten Gasgemisches aus der Aufbereitungsanlage fluidtechnisch parallel angeordnet sind und durch steuerbare Ventile wenigstens einer der Reaktorbehälter mit der Zuführung und der Abführung verbindbar ist, insbesondere während wenigstens ein anderer Reaktorbehälter (2) von der Zuführung (3) und der Abführung (4a) trennbar ist.

13. Aufbereitungsanlage nach Anspruch 12, **dadurch gekennzeichnet, dass** jeder der Reaktorbehälter (1, 2) einen Anschluß aufweist, über den Abgas einer mit dem aufbereiteten Gasgemisch betriebenen Anlage (4) zuführbar ist.
